# FASCICULE DE BREVET EUROPEEN

(11) **EP 0 696 402 B1**
(45) Date de publication et mention de la délivrance du brevet: **15.11.2000**
(21) Numéro de dépôt: 95911359.8
(22) Date de dépôt: 01.03.1995
(51) Int. Cl.: H04N 5/50, H04N 7/087

(54) **PROCEDE DE PROGRAMMATION AUTOMATIQUE DE TUNER**
VERFAHREN ZUR AUTOMATISCHEN PROGRAMMIERUNG EINES TUNERS
METHOD OF AUTOMATICALLY PROGRAMMING A TUNER

(30) Priorité: 01.03.1994 FR 9402332
(43) Date de publication de la demande: 14.02.1996
(73) Titulaire: THOMSON multimedia, 92648 Boulogne Cédex (FR)
(72) Inventeur: STARON, Alain, F-92050 Paris-La Défense Cédex (FR)
(74) Mandataire: Zhang, Jianguo
(86) Numéro de dépôt international: FR9500238
(87) Numéro de publication internationale: WO9524098

(56) Documents cités:
- EP-A- 0 312 798
- DE-A- 3 200 751
- DE-A- 3 941 628
- FR-A- 2 685 845
- FUNKSCHAU, no. 18, 25 Août 1978 pages 74-78, WERNER HENZE 'Microprozessor steuert UKW -Empfänger'
- PATENT ABSTRACTS OF JAPAN vol. 8 no. 200 (E-266) ,13 Septembre 1984 & JP,A,59 089039 (MATSUSHITA DENKI SANGYO K.K.) 23 Mai 1984,

## Description

La présente invention concerne un procédé de programmation automatique de tuner de téléviseur et/ou de magnétoscope grâce à l'utilisation d'informations transmises par ondes terrestres, câbles ou satellite. La présente invention concerne aussi un dispositif mettant en oeuvre ce procédé.

Lorsqu'on installe pour la première fois quelque part un téléviseur ou un magnétoscope, se pose le problème de sa programmation. Dans le cas de diffusions par ondes hertziennes, les programmes de télévision sont diffusées selon un plan d'allocation de fréquences se décomposant en canaux numérotés auxquels correspondent des fréquences porteuses prédéterminées. D'une région géographique à l'autre, on est amené à diffuser un même programme sur des canaux différents afin d'éviter les interférences. Il est ainsi impossible de programmer un tuner de téléviseur ou de magnétoscope d 'une manière unique et définitive lors de sa fabrication. La programmation pour la mise en service doit donc être effectuée sur le lieu de l'installation de l'appareil. Pour cela, l'utilisateur doit régler son tuner sur les canaux utilisés, reconnaître les chaînes et les associer au numéro correspondant. Cette opération peut s'avérer longue et délicate, d'autant plus que le nombre de chaînes est grand. Aussi les fabricants de téléviseurs et de magnétoscopes ont proposé divers systèmes d'aide à la programmation.

Une première solution consiste à équiper le tuner d'un dispositif se calant automatiquement sur les canaux utilisés, l'utilisateur n'ayant plus à reconnaître l'identité de la chaîne pour l'associer au numéro correspondant. Une autre solution consiste à munir le téléviseur d'un récepteur-décodeur CEEFAX (standard Européen de télétexte), les données transmises par le télétexte permettant au tuner d'associer automatiquement le canal d'émission de la chaîne au numéro d'ordre de la chaîne. Ce système ne peut fonctionner efficacement que si chaque chaîne possède son propre télétexte (ce qui n'est généralement pas le cas). Pour éviter tous ces inconvénients, une autre solution a été proposée qui consiste à télécharger des données par le téléphone, ces données représentent les tables de correspondance entre les canaux et les numéros d'ordre des chaînes, identifiables par le code postal correspondant. Le problème de ce système est qu'il faut équiper le téléviseur ou la télécommande d'un modem.

Une demande de brevet allemande DE 3200751 A1 divulgue en effet un procédé de programmation de tuner et plus particulièrement un procédé et récepteur ayant un circuit pour le réglage d'un émetteur pour tenir compte du lieu géographique de l'installation du récepteur. Le procédé comprend l'étape de réception des signaux numériques et analogiques contenant un code d'identification et une liste de canaux, l'étape de reconnaissance du code d'identification, l'étape de lecture des données des signaux, et l'étape d'identification des canaux grâce au code postal entré par l'utilisateur. Mais ce procédé et ce récepteur ne permettent pas d'obtenir une bonne sélection des fréquences de réception.

La présente invention permet une programmation entièrement automatique du téléviseur et/ou du magnétoscope quelque soit le lieu géographique de la mise en service de l'appareil.

L' invention concerne un procédé de programmation automatique de tuner à partir d'un signal vidéofréquence composite (S) numérique ou analogique comportant les étapes suivantes:
- réception de signaux (S) numériques ou analogiques portés par une partie d'un train de données numériques multiplexées ou par au moins une partie du signal analogique non utilisée pour les signaux vidéo, les signaux numériques representant un code d'identification de tables de canaux (CI) et des tables de canaux correspondant chacune à un émetteur,
- reconnaissance du code d'identification du signal (S) par comparaison avec un code mémorisé, et en cas de reconnaissance ;
- lecture des données portées par le signal (S),
- identification d'une table de canaux correspondant à l'émetteur du lieu d'installation du tuner grâce au code postal du lieu d'installation entré par l'utilisateur.

Selon l'invention, l'étape d'identification des canaux comprend en outre les étapes suivantes:
on identifie au moins une table de canaux correspondant à la plage des codes postaux comportant le code postal du lieu d'installation, chaque plage de codes postaux étant associée à une table de canaux, les limites des plages étant transmises dans le signal numérique
   - à partir d'une table de canaux (TC0) ainsi identifiée, programmation automatique du tuner.

De préférence, les données numériques portées par le signal sont des données de type Teletext au format CEEFAX. La présente invention concerne aussi un dispositif de programmation automatique de tuner de téléviseur et/ou de magnétoscope comportant un émetteur, un tuner, un décodeur CEEFAX, un microprocesseur et un dispositif d'interface utilisateur, qui met en oeuvre le procédé de programmation décrit plus haut.

Ainsi, lors de l'installation du téléviseur, la programmation du téléviseur selon ce procédé ne nécessite aucune opération de la part de l'utilisateur, sauf l'entrée de son code postale, grâce au clavier de sa télécommande.

Un autre avantage de la présente invention est qu'elle peut s'adapter à tout changement ou réorganisation des attributions de canaux pour le réseau Hertzien ou pour la diffusion par câble et satellite, dans la mesure où l'utilisateur peut mettre à jour de la même manière son appareil. Le téléviseur peut aussi remettre à jour sa programmation régulièrement d'une manière automatique, par exemple une fois par mois.

Par ailleurs, ce procédé de programmation est associé à un dispositif de programmation tel que défini dans la revendication 8.

La présente invention sera mieux comprise et des avantages supplémentaires apparaîtront grâce à la description qui va suivre illustrée par les figures suivantes :
- la figure 1 représente un exemple de signal vidéo pouvant porter les signaux particuliers nécessaires au procédé de programmation selon l'invention,
- la figure 2 représente l'organigramme d'un exemple de réalisation de la présente invention et,
- la figure 3 représente un exemple de dispositif de mise en oeuvre du procédé selon la présente invention.

Certaines chaînes proposent un service de télétexte comme par exemple le service Teletext (format de vidéotexte Européen) consistant à transmettre en même temps que le signal vidéo des signaux numériques correspondant à un certain nombre de pages affichables sur l'écran. Ces pages peuvent contenir différentes informations mises à jour régulièrement comme la météo, les nouvelles, les programmes TV, etc...

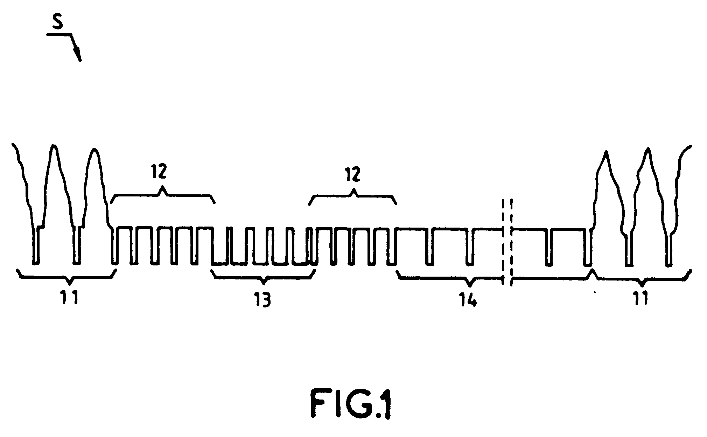

La figure 1 représente la partie retour-trame d'un exemple de signal vidéofréquence composite S qui est celui de la norme Française L-L'. Les parties 11 correspondent au signal vidéo proprement dit, c'est à dire au balayage des lignes (dans notre cas: 625) qui ont pour largeur 1/fh, fh étant la fréquence ligne. Les parties 12 et la partie 13 de ce signal sont respectivement les impulsions d'égalisation et de trames (signaux de trames provoquant le retour du spot en haut de l'image, au début d'une trame paire ou impaire) ayant chacunes une largeur de 1/2fh.

La partie 14 correspond à des lignes laissées noires (lignes d'effacement au nombre de 24 dans notre exemple) qui sont utilisées pour transmettre divers signaux comme les signaux Teletext par exemple. La période totale de ce signal S est 1/ft, ft étant la fréquence trame du signal.

L'objet principal de la présente invention consiste à utiliser certaines de ces lignes noires (par exemple les lignes 5 et 6) pour transmettre des signaux particuliers qui sont des signaux numériques contenant les informations relatives aux tables de canaux (channel tables). Chacune de ces tables correspond à une plage de codes postaux (ZIP code) et contient la correspondance entre la liste des chaînes (par leurs noms et/ou leurs numéros) et la liste des canaux (par leurs fréquences), correspondance caractéristique du lieu géographique identifiable par un code postal. Dans certains cas, il peut aussi y avoir plusieurs tables différentes pour un même code postal. De préférence, le téléviseur peut alors, à partir de paramètres mesurant la qualité de la réception, choisir automatiquement la table dont les données correspondent à la meilleure qualité de la réception. Par exemple, un paramètre utilisable peut être le niveau donné à chaque canal par le circuit de contrôle automatique du gain (CAG) du tuner, celui-ci délivre une tension de réglage du gain d'amplificateur. Cette tension peut être mémorisée pour chaque canal d'une des tables sélectionnées, et une seconde routine élimine les canaux ayant la même identification en ne gardant que celui ayant un niveau correspondant à la réception la meilleure.

Dans le cas de transmissions numériques (MAC, formats digitaux), les signaux servant à la programmation ont une place réservée dans le train de données digitales. Ce train de bits est démultiplexé et les données relatives à la programmation sont traitées par le procédé selon l'invention.

Dans le cas de transmissions analogiques, de préférence, ces signaux sont au format CEEFAX et sont affichés sur des pages spéciales type Teletext et sont portés par une ou plusieurs des lignes noires (par exemple lignes 5 et 6) du signal vidéo. Les pages spéciales contenant ces tables de canaux sont associées à un code d'identification (dans le cas de signaux au format CEEFAX ces codes sont simplement les numéros des pages de teletext utilisées) que peuvent reconnaitre, en balayant les fréquences, les appareils mettant en oeuvre le procédé selon la présente invention grâce au même code mémorisé (par exemple, pages 10, 11 et 12) . Après avoir reconnu ce code d'identification, les appareils stoppent le balayage de fréquence et les données sont lues, celles correspondant au code postal que l'utilisateur a préalablement entrées sont stockées éventuellement dans une mémoire, afin de programmer le tuner du téléviseur ou du magnétoscope. Lors de l'installation de ces appareils, l'utilisateur entre le code postal du lieu d'installation et l'appareil se programme automatiquement en lisant les données transmises, ou en allant chercher en mémoire la table correspondante quand l'appareil a stocké les données qui lui sont associées et calle la bonne chaine sur le bon canal correspondant.

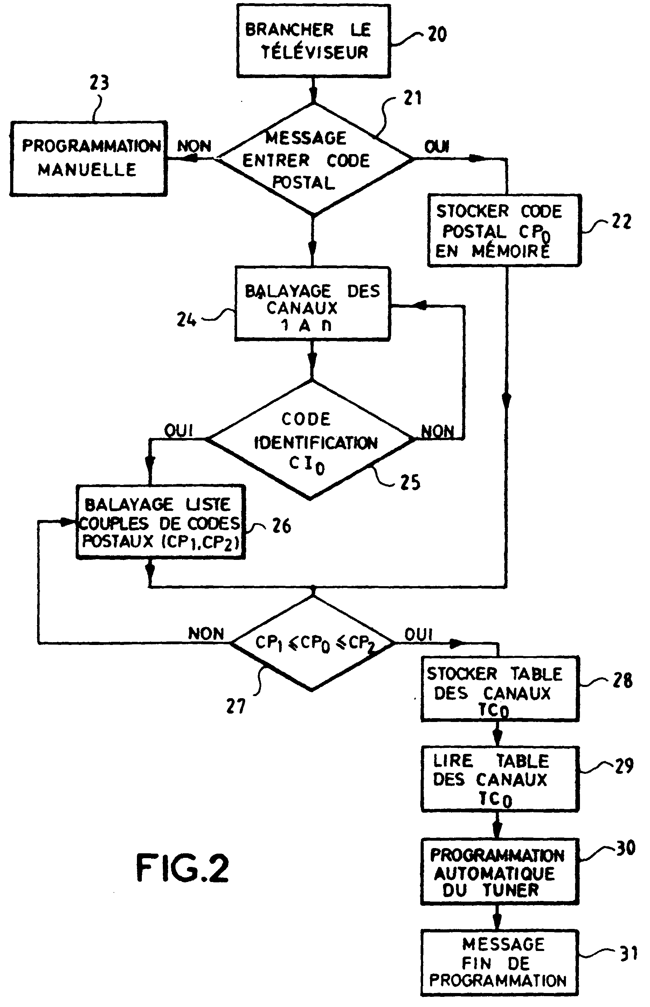

La figure 2 montre l'organigramme d'un exemple de réalisation de la présente invention. L'utilisateur branche son téléviseur (20). Une fois sous tension, celui-ci affiche un message demandant à l'utilisateur d'entrer le code postal CP du lieu dans lequel il se trouve (21). Si ce dernier souhaite utiliser la programmation automatique, il choisit d'entrer son code postal CP0 qui est stocké en mémoire (22), sinon une autre programmation de type classique est nécessaire (23).

Le tuner balaye les canaux 1 à n (24) en commençant par exemple par la fréquence la plus basse jusqu'à ce qu'il identifie le canal sur lequel est transmis le code d'identification CIO et qui porte les signaux particuliers (25). Dans le cas de signaux de type Teletext dans le format CEEFAX, les pages spéciales comportent les tables de canaux TC correspondant à un émetteur E associé à un couple de codes postaux CP1 et CP2, représentant par exemple les limites inférieure et supérieure des codes postaux de la région desservie par ledit émetteur.

Ainsi, pour chaque couple de codes postaux (CP1,CP2), le code CP1 correspond au numéro inférieur du code postal de la commune recevant les émissions de l'émetteur E, et le code CP2 correspond au numéro supérieur du code postal de la commune recevant le même émetteur E (CP1 inférieur ou égal à CP2). Ces couples sont lus (26) et comparés au code postal CP0 (27) entré en mémoire (22). Lorsque celui-ci est supérieur ou égal à la valeur CP1 et inférieur ou égal à la valeur CP2 (27), la table de canaux correspondant à ce couple (CP1,CP2) est transmise directement au tuner pour qu'il soit programmé, ou est stockée en mémoire (28). Dans ce dernier cas, les données de cette table sont ensuite lues (29) et le tuner est programmé en fonction (30) des dites données. Lorsque cette programmation est terminée, un message de fin peut-être affiché (31) afin d'indiquer à l'utilisateur qu'il peut utiliser son téléviseur ou magnétoscope.

De préférence on stocke en mémoire les canaux avec leurs niveaux donnés par le CAG. Ainsi, lorsqu'à un code postal CPO correspond deux ou plusieurs tables de canaux, le procédé peut, en balayant systématiquement toutes les données transmises et en enregistrant les tables de canaux correspondant au même code postal et les niveaux du CAG de chacun des canaux, comparer les niveaux du CAG pour ne sélectionner que la table correspondant à la meilleure réception. Cette sélection peut consister par exemple, à additionner pour chaque table les différents niveaux des canaux, et à ne conserver que la table ayant la somme des niveaux de CAG la plus importante, dans le cas où par exemple les niveaux considérés correspondent à la tension redressée mesurée en sortie du CAG.

Comme on peut le voir, lorsque l'utilisateur change de lieu avec son téléviseur ou lorsqu'il installe un nouveau téléviseur, grâce au procédé selon l'invention, il n'a aucune manipulation à faire pour programmer ou reprogrammer son téléviseur ou son magnétoscope, puisque à tout code postal est associé la table de canaux correspondant à l'émetteur dont la reception dans ladite commune est la meilleure.

Dans l'exemple du procédé selon l'invention appliqué au territoire Français et utilisant des données CEEFAX, considérant que pour couvrir 80% de ce territoire, il est nécessaire de répertorier 120 émetteurs (environ), la programmation prendrait moins de quatre secondes. En effet, pour identifier le code postal CPO entré par l'utilisateur, il faut 11 caractères correspondant aux codes CP1 et CP0 identifié (exemple: 75001;75020). Supposant qu'il n'y ait que six chaînes, à chaque chaîne peuvent être associés 3 caractères d'identification (exemple: TF1, FR2, FR3, CL + ,ART et M06), et 6 de fréquence(exemple: 125.75, 138.25, etc...). La programmation du tuner peut nécessiter une vingtaine de caractères (Rang/Norme/Code Gemstar). Il suffirait alors de transmettre environ 10 000 caractères, soit une dizaine de pages de Teletext en format CEEFAX pour les 120 émetteurs. Sachant qu'en une seconde 3 pages de télétexte sont transmises en utilisant un retour ligne du signal, moins de quatre secondes sont nécessaires pour transmettre l'ensemble des caractères nécessaires à la programmation automatique selon l'invention, si un seul retour ligne est alloué au service (accélération si plusieurs retours lignes sont alloués).

Un exemple de table de canaux peut être le train de caractères suivant:
75001/75020/TF1/125.75/111/FR2/138.25/112/FR3/145.25/113/CL + /272.75/114/ART/442.25/115/M06/380.25/

Une variante de procédé peut être de demander initialement à l'utilisateur s'il désire utiliser la programmation automatique (oui/non), et en cas de réponse positive ne lui demander d'entrer son code postal que lorsque le canal porteur des pages spéciales est identifié par son code CIO.

Un perfectionnement de la présente invention peut consister, lors d'une éventuelle modification de la table de canaux correspondant au lieu d'installation, à transmettre un code particulier annonçant cette modification, le microprocesseur du téléviseur reconnaissant le signal, lance la routine décrite plus haut et le téléviseur se reprogramme sans que l'utilisateur n'ait eu à faire la moindre manipulation de reprogrammation. Cela nécessite une simple routine supplémentaire de veille du microprocesseur. Une autre possiblité peut être que le téléviseur se reprogramme automatiquement régulièrement (par exemple une fois par mois). De même que pour l'exemple décrit plus haut, un ou plusieurs messages d'attente destinés à l'utilisateur peuvent être affichés pendant le déroulement de la programmation.

Il est bien évident que tous les différents types de transmission de données (code d'identification CI, codes postaux CP, table de canaux TC) peuvent être utilisés sans sortir du cadre de la présente invention.

Pour la diffusion par cable ou par satellite, le message du début (21) peut être de demander à l'utilisateur de préciser l'option cable C ou satellite en entrant par exemple le nom de celui-ci, la programmation s'effectuant d'une manière équivalente à celle décrite dans les cas précédents de la diffusion Hertzienne.

Afin que le procédé selon l'invention ne puisse pas être utilisé par un fabricant concurrent, un perfectionnement peut être de crypter les signaux numériques dans le cadre général d'un système d'encryptage de signaux vidéo (du type par exemple Eurocrypt ou Videocrypt), ou dans le cadre particulier d'encryptage de ces signaux seuls, le téléviseur ou le magnétoscope étant muni d'un dispositif permettant le décryptage de ces signaux uniquement.

De la même manière que les services Teletext, l'éditeur de ces signaux peut aussi utiliser ces lignes noires pour y transmettre tout autre type d'informations, comme par exemple des publicités (catalogues, lieux de vente, promotions,...) pour le fabricant de téléviseur ou des informations le concernant exclusivement.

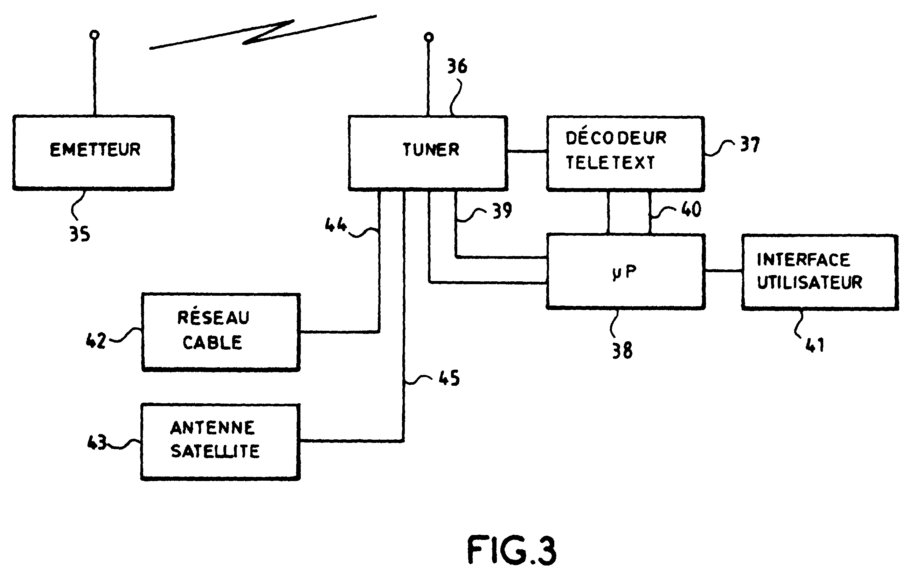

Sur la figure 3 est représenté un émetteur de télédiffusion Hertzienne 35 qui émet des signaux vidéo reçus par le tuner 36 d'un téléviseur ou d'un magnétoscope. Ce tuner 36 est connecté à un décodeur CEEFAX 37 pour les données de type Teletext (comme par exemple un dispositif TPU 3040 de ITT ou SDA 5273 de Siemens). Le tuner 36, le décodeur Teletext 37 sont commandés via des bus 39 et 40 par un microprocesseur 38. Ce microprocesseur 38 comporte un espace mémoire contenant le code d'identification CIO des données particulières transmises. Eventuellement, ce code peut être modifié par ces données si cela est nécessaire par un simple moyen de programmation. Le microprocesseur contient aussi un espace mémoire réinscriptible permettant de stocker le code postal de l'utilisateur et éventuellement la table de canaux correspondante. L'utilisateur entre son code postal CP0 grâce à un dispositif d'interface 41 de type connu comportant un clavier de commande, un émetteur et un récepteur infrarouge. Le microprocesseur 38 lance le procédé de programmation automatique du type de celui décrit à partir de la figure 2 et reçoit les données particulières via le bus 40, et programme le tuner via le bus 39.

Pour mettre en oeuvre le procédé selon l'invention permettant la programmation du téléviseur à partir du réseau cablé 42 ou d'un satellite via une antenne 43, il est nécessaire que le tuner 36 soit équipé de prise cable 44 et satelitte 45.

La présente invention peut s'appliquer à tous les types de standard (PAL, PAL +, SECAM, NTSC, D2MAC, HDMAC, Standards Digitaux,...) ainsi qu'à tous les types de formats de signaux transmis avec des signaux vidéo, ces signaux peuvent être compressés ou non, situés ou non dans le retour ligne (utilisation possible du NICAM), multiplexés à un signal digital.

## Revendications

1. Procédé de programmation automatique d'un tuner (36) de téléviseur et/ou magnétoscope à partir d'un signal vidéofréquence composite (S) numérique ou analogique comportant les étapes suivantes:
réception de signaux (S) numériques portés par une partie d'un train de données numériques multiplexées ou par au moins une partie du signal non utilisée pour les signaux vidéo, les signaux numériques représentant un code d'identification de tables de canaux (CI) et des tables de canaux correspondant chacune à un émetteur,
reconnaissance du code d'identification du signal (S) par comparaison avec un code mémorisé, et dans le cas de reconnaissance :
lecture des données portées par le signal (S),
identification d'une table de canaux correspondant à l'émetteur du lieu d'installation du tuner (46) grâce au code postal du lieu d'installation entré par l'utilisateur,
ledit procédé étant caractérisé par le fait que:
on identifie au moins une table de canaux correspondant à la plage de codes postaux comportant le code postal du lieu d'installation, chaque plage de codes postaux étant associée à une table de canaux, les limites des plages étant transmises dans le signal numérique, et
à partir d'une table de canaux ainsi identifiée, programmation automatique du tuner (36).

2. Procédé selon la revendication 1, caractérisé en ce que l'étape d'identification comporte l'identification de plusieurs tables correspondant à un même code postal.

3. Procédé selon la revendication 2, caractérisé en ce qu'il comporte en outre l'étape de sélection de la table de canaux correspondant à la meilleure réception.

4. Procédé selon la revendication 3, caractérisé en ce que l'étape de sélection comporte l'étape de comparaison des niveaux de contrôle automatique de gain correspondant aux canaux de chaque table.

5. Procédé selon la revendication 4, caractérisé en ce que l'étape de comparaison de niveaux est réalisée en additionnant, pour chaque table, les niveaux de contrôle de gain automatique, et en retenant la table ayant la somme la plus importante.

6. Procédé selon l'une des revendications précédentes, caractérisé en ce que les données numériques portées par le signal (S) sont des données de type teletext.

7. Procédé selon la revendication 6, caractérisé en ce que le code d'identification est le numéro de page de teletext.

8. Procédé selon l'une quelconque des revendications précédentes, caractérisé en ce que le signal porteur du code et des tables de canaux est un signal transmis par câble ou par satellite.

## Claims

1. Process for automatically programming a television and/or video recorder tuner (36) on the basis of a digital or analogue composite video frequency signal (S) comprising the following steps:
reception of digital signals (S) carried by a part of a string of multiplexed digital data or by at least a signal part not used for the video signals, the digital signals representing an identification code (IC) for channel tables and channel tables each corresponding to a transmitter,
recognition of the identification code of the signal (S) by comparison with a stored code, and in the case of recognition:
reading of the data carried by the signal (S),
identification of a channel table corresponding to the transmitter of the site of installation of the tuner (46) by virtue of the postcode of the site of installation entered by the user,
the said process being characterized in that:
at least one table of channels corresponding to the range of postcodes comprising the postcode of the site of installation is identified, each range of postcodes being associated with a table of channels, the limits of the ranges being transmitted in the digital signal, and
on the basis of a thus-identified table of channels, automatic programming of the tuner (36).

2. Process according to Claim 1, characterized in that the identification step comprises the identification of several tables corresponding to one and the same postcode.

3. Process according to Claim 2, characterized in that it furthermore comprises the step of selecting the table of channels corresponding to the best reception.

4. Process according to Claim 3, characterized in that the selection step comprises the step of comparing the automatic gain control levels corresponding to the channels of each table.

5. Process according to Claim 4, characterized in that the step of comparing levels is carried out by adding together, for each table, the automatic gain control levels, and by retaining the table having the largest sum.

6. Process according to one of the preceding claims, characterized in that the digital data carried by the signal (S) are data of teletext type.

7. Process according to Claim 6, characterized in that the identification code is the teletext page number.

8. Process according to any one of the preceding claims, characterized in that the signal carrying the code and the tables of channels is a signal transmitted by cable or by satellite.

## Patentansprüche

1. Verfahren zur automatischen Programmierung eines Tuners (36) eines Fernsehgerätes und/oder eines Videorekorders durch ein digitales oder analoges zusammengesetztes videofrequentes Signal (S) mit folgenden Schritten:
Empfang der digitalen Signale (S), die durch einen Teil einer gemultiplexten digitalen Datenfolge oder durch wenigstens einen Teil eines für die Videosignale nicht benutzten Signals übertragen werden, wobei die digitalen Signale einen Identifizierungs-Code (CI) für die Tabellen der Kanäle darstellen und die Tabellen der Kanäle jeder einem Sender entsprechen,
Erkennung des Identifizierungs-Codes des Signals (S) durch Vergleich mit einem gespeicherten Code und im Falle der Erkennung:
Lesen der durch das Signal (S) übertragenen Daten,
Identifizierung einer Tabelle von Kanälen, die dem Sender an dem Ort der Inbetriebnahme des Tuners (46) durch eine durch den Benutzer eingegebene Postleitzahl für den Ort der Inbetriebnahme entsprechen,
gekennzeichnet durch folgende Schritte:
es wird wenigstens eine Tabelle von Kanälen identifiziert, die dem Bereich der Postleitzahlen entsprechen, die die Postleitzahl an dem Ort der Inbetriebnahme enthalten, jeder Bereich der Postleitzahlen wird einer Tabelle der Kanäle zugeordnet, und die Bereichsgrenzen werden in dem digitalen Signal übertragen, und
automatische Programmierung des Tuners (36) mit einer derart identifizierten Kanaltabelle.

2. Verfahren nach Anspruch 1, dadurch gekennzeichnet, daß der Schritt der Identifizierung die Identifizierung mehrerer, derselben Postleitzahl entsprechenden Tabellen enthält.

3. Verfahren nach Anspruch 2, dadurch gekennzeichnet, daß der Schritt außerdem den Schritt der Wahl der Tabelle der Kanäle mit dem besten Empfang enthält.

4. Verfahren nach Anspruch 3, dadurch gekennzeichnet, daß der Schritt für die Wahl den Schritt des Vergleichs der Werte für die automatische Verstärkungsregelung entsprechend den Kanälen jeder Tabelle enthält.

5. Verfahren nach Anspruch 4, dadurch gekennzeichnet, daß der Schritt für den Vergleich der Werte dadurch erfolgt, daß für jede Tabelle die Werte der automatischen Verstärkungsregelung addiert werden und die Tabelle mit der größten Summe verwendet wird.

6. Verfahren nach einem der vorangehenden Ansprüche, dadurch gekennzeichnet, daß die durch das Signal (S) übertragenen digitalen Daten Videotext-Daten sind.

7. Verfahren nach Anspruch 6, dadurch gekennzeichnet, daß der Identifizierungs-Code die Videotext-Seitennummer ist.

8. Verfahren nach einem der vorangehenden Ansprüche, dadurch gekennzeichnet, daß das Trägersignal für den Code und die Kanaltabellen ein über Kabel oder über Satellit übertragenes Signal sind.
